# EUROPEAN PATENT APPLICATION

(11) **EP 4 134 707 A1**
(43) Date of publication of application: **15.02.2023**
(21) Application number: 22189460.3
(22) Date of filing: 09.08.2022
(51) Int. Cl.: G01S 17/08, G01S 17/86, G01S 17/894, G01C 15/00, G01B 11/00, G01S 7/48, G02B 26/10, G01S 7/481

(54) **CONSTRUCTION SITE DIGITAL FIELD BOOK FOR THREE-DIMENSIONAL SCANNERS**

(30) Priority: 13.08.2021 US 202163232781 P
(71) Applicant: Faro Technologies, Inc., Lake Mary, FL 32746-6204 (US)
(72) Inventor: WOHLFELD, Denis, 70825 Korntal-Münchingen (DE); BAUER, Heiko, 70825 Korntal-Münchingen (DE); BOHRET, Tobias, 70825 Korntal-Münchingen (DE)
(74) Representative: McNamara, Kathryn

(57) **Abstract**

A method, system, and computer product that track scanning data acquired by a three-dimensional (3D) coordinate scanner is provided. The method includes storing a digital representation of an environment in memory of a mobile computing device. A first scan is performed with the 3D coordinate scanner in an area of the environment. A location of the first scan is determined on the digital representation. The first scan is registered with the digital representation. The location of the 3D coordinate scanner is indicated on the digital representation at the time of the first scan.

## Description

### CROSS REFERENCE TO RELATED APPLICATIONS

The This application claims the benefit of U.S. Provisional Application Serial No. 63/232,781, filed August 13, 2021, the entire disclosure of which is incorporated herein by reference..

### BACKGROUND

The subject matter disclosed herein relates to using a three-dimensional (3D) coordinate measurement devices, and in particular to laser scanner time-of-flight (TOF) coordinate measurement devices that are used in construction applications.

A TOF laser scanner is a scanner in which the distance to a target point is determined based on the speed of light in the air between the scanner and a target point. Laser scanners are typically used for scanning closed or open spaces such as interior areas of buildings, industrial installations, and tunnels. They may also be used, for example, in industrial applications and accident reconstruction applications. A laser scanner optically scans and measures objects in a volume around the scanner through the acquisition of data points representing object surfaces within the volume. Such data points are obtained by transmitting a beam of light onto the objects and collecting the reflected or scattered light to determine the distance, two-angles (i.e., azimuth and a zenith angle), and optionally a gray-scale value. This raw scan data is collected, stored, and sent to a processor or processors to generate a 3D image representing the scanned area or object.

Generating an image requires at least three values for each data point. These three values may include the distance and two angles or maybe transformed values, such as the x, y, z coordinates. In an embodiment, an image is also based on a fourth gray-scale value, which is a value related to the irradiance of scattered light returning to the scanner.

Most TOF scanners direct the beam of light within the measurement volume by steering the light with a beam steering mechanism. The beam steering mechanism includes a first motor that steers the beam of light about a first axis by a first angle that is measured by a first angular encoder (or another angle transducer). The beam steering mechanism also includes a second motor that steers the beam of light about a second axis by a second angle that is measured by a second angular encoder (or another angle transducer).

Where a large area is to be scanned, the operators may have to perform multiple scans from different locations to obtain a complete, or mostly complete, measurement of the desired area. In some instances, the operator may employ multiple teams, each with their own scanner, that perform scanning operations at the same time to reduce the overall time used for obtaining a measurement of the desired area. It should be appreciated that once the scanning operations are completed, the data generated by each of the individual scans is combined together. This combining process includes spatially positioning and aligning (commonly referred to as registration) the 3D coordinate data into a common frame of reference. To facilitate this registration of the data, accurate notes are kept by the scanning operator on where, and in some cases which scanner, performed each scan. While there are some tools available to perform the registration, the registration process of complex data sets usually involves some manual operations and a skilled operator.

To coordinate the scanning operations to ensure all of the scans are performed (to avoid occlusions in the data) and facilitate the registration process. To do this the scanner operators use what is typically referred to as a "field book." The field book is a paper layout or floor plan of the building or area to be scanned. The notes on where the scans were performed and which scanner performed the scan are then written on the paper floorplan. This paper document is then used by the operator performing the registration to provide an approximate location for each of the scan data sets.

Accordingly, while existing methods of measuring areas or buildings with 3D scanners are suitable for their intended purposes, what is needed is a 3D scanner having certain features of embodiments of the present disclosure.

### BRIEF DESCRIPTION

According to one or more embodiments, a method of tracking scanning data acquired by a three-dimensional (3D) coordinate scanner is provided. The method includes storing a digital representation of an environment in memory of a mobile computing device. A first scan is performed with the 3D coordinate scanner in an area of the environment. A location of the first scan is determined on the digital representation. The first scan is registered with the digital representation. The location of the 3D coordinate scanner is indicated on the digital representation at the time of the first scan.

In addition to one or more of the features described herein, or as an alternative, further embodiments of the method may include the digital representation of the environment being at least one of a 2D floorplan, a building information management model, a computer aided design model, a point cloud, or a 3D surface model.

In addition to one or more of the features described herein, or as an alternative, further embodiments of the method may include generating a first point cloud based at least in part on the first scan.

In addition to one or more of the features described herein, or as an alternative, further embodiments of the method may include generating a first subset point cloud based at least in part on the first point cloud, the first subset point cloud having less 3D coordinate data than the first point cloud.

In addition to one or more of the features described herein, or as an alternative, further embodiments of the method may include the registering of the first scan with the digital representation being positioning and orienting of the first subset point cloud on the digital representation.

In addition to one or more of the features described herein, or as an alternative, further embodiments of the method may include the first subset point cloud being points of 3D coordinates of walls in the area, and the positioning and orienting of the first subset point cloud includes matching the points of 3D coordinates of walls with at least two walls on the digital representation.

In addition to one or more of the features described herein, or as an alternative, further embodiments of the method may include acquiring a 2D image of the area at an actual location of the first scan, wherein the determining a location includes matching at least three feature points in the 2D image with feature points on the digital representation.

In addition to one or more of the features described herein, or as an alternative, further embodiments of the method may include the 2D image being acquired with a camera on the 3D coordinate scanner.

In addition to one or more of the features described herein, or as an alternative, further embodiments of the method may include the 2D image being acquired with a camera on the mobile computing device.

In addition to one or more of the features described herein, or as an alternative, further embodiments of the method may include the determining a location being at least one of 5G localization, image-based localization, reduced-data registration, Global Positioning Satellites (GPS), GLONASS Global Navigation Satellite System, Galileo Global Navigation Satellite System, Beidou Global Navigation Satellite System, LORAN navigation systems, wireless local area network based positioning systems, Ultrawide band positioning systems, and Bluetooth based positioning systems, within the area.

In addition to one or more of the features described herein, or as an alternative, further embodiments of the method may include the localization being reduced-data registration that is performed via a cloud to cloud registration method.

In addition to one or more of the features described herein, or as an alternative, further embodiments of the method may include the determining a location being displaying the digital representation on the mobile computing device, and the operator touching the screen at the position on the digital representation where the first scan was performed.

In addition to one or more of the features described herein, or as an alternative, further embodiments of the method may include the indicating the location of the 3D coordinate scanner on the digital representation being a coloring of the region on the digital representation that the first scan measured 3D coordinates.

In addition to one or more of the features described herein, or as an alternative, further embodiments of the method may include the indicating the location of the 3D coordinate scanner on the digital representation being a placing of a scanner identification data and a scan number data on the digital representation at the location.

In addition to one or more of the features described herein, or as an alternative, further embodiments of the method may include at least one of the steps is performed in a cloud computing environment.

In addition to one or more of the features described herein, or as an alternative, further embodiments of the method may include synchronizing the digital representation with the indication of the location of the 3D coordinate scanner with at least one other computing device.

In addition to one or more of the features described herein, or as an alternative, further embodiments of the method may include the at least one other computing device being a second mobile computing device.

In addition to one or more of the features described herein, or as an alternative, further embodiments of the method may include the at least one other computing device being located in a cloud computing environment.

In addition to one or more of the features described herein, or as an alternative, further embodiments of the method may include the synchronizing being performed over a communications medium.

In addition to one or more of the features described herein, or as an alternative, further embodiments of the method may include the synchronizing being performed with a second mobile computing device when a quality parameter of the communications medium is below a threshold, and the synchronizing is with a third computing device located in a cloud computing environment.

In addition to one or more of the features described herein, or as an alternative, further embodiments of the method may include the synchronizing with the second mobile computing device being via a wired local area network, a wireless local area network, Bluetooth, or a combination of the foregoing.

According to one or more embodiments, a system of tracking scanning data is provided. The system including a mobile computing device having memory with a digital representation of an environment stored thereon. A 3D coordinate scanner is configured to determine 3D coordinates of points in an area of the environment. One or more processors are operably coupled to the mobile computing device and the 3D coordinate scanner, the one or more processors being responsive to executable computer instructions for: causing the 3D coordinate scanner to perform a first scan; determining a location of the first scan on the digital representation; registering the first scan with the digital representation; and indicating the location of the 3D coordinate scanner on the digital representation at the time of the first scan.

In addition to one or more of the features described herein, or as an alternative, further embodiments of the system may include the digital representation of the environment includes at least one of a 2D floorplan, a building information management model, a computer aided design model, a point cloud, or a 3D surface model.

In addition to one or more of the features described herein, or as an alternative, further embodiments of the system may include the one or more processors being further responsive to executable computer instructions to generate a first point cloud based at least in part on the first scan.

In addition to one or more of the features described herein, or as an alternative, further embodiments of the system may include the registering of the first scan with the digital representation including positioning and orienting the first subset point cloud on the digital representation.

In addition to one or more of the features described herein, or as an alternative, further embodiments of the system may include the first subset point cloud being points of 3D coordinates of walls in the area, and the positioning and orienting of the first subset point cloud includes matching the points of 3D coordinates of walls with at least two walls on the digital representation.

In addition to one or more of the features described herein, or as an alternative, further embodiments of the system may include acquiring a 2D image of the area at an actual location of the first scan, wherein the determining a location includes matching at least three feature points in the 2D image with feature points on the digital representation.

28 In addition to one or more of the features described herein, or as an alternative, further embodiments of the system may include the 3D coordinate scanner having a camera, the 2D image being acquired with the camera.

In addition to one or more of the features described herein, or as an alternative, further embodiments of the system may include the mobile computing device having a camera, the 2D image being acquired with the camera.

In addition to one or more of the features described herein, or as an alternative, further embodiments of the system may include the determining of a location includes at least one of 5G localization, image-based localization, reduced-data registration, Global Positioning Satellites (GPS), GLONASS Global Navigation Satellite System, Galileo Global Navigation Satellite System, Beidou Global Navigation Satellite System, LORAN navigation systems, wireless local area network based positioning systems, Ultrawide band positioning systems, and Bluetooth based positioning systems, within the area.

In addition to one or more of the features described herein, or as an alternative, further embodiments of the system may include the localization having reduced-data registration that is performed via a cloud to cloud registration method.

In addition to one or more of the features described herein, or as an alternative, further embodiments of the system may include the determining of a location includes displaying the digital representation on the mobile computing device, and the operator touching the screen at the position on the digital representation where the first scan was performed.

In addition to one or more of the features described herein, or as an alternative, further embodiments of the system may include the indicating the location of the 3D coordinate scanner on the digital representation includes coloring the region on the digital representation that the first scan measured 3D coordinates.

In addition to one or more of the features described herein, or as an alternative, further embodiments of the system may include the indicating the location of the 3D coordinate scanner on the digital representation includes placing a scanner identification data and a scan number data on the digital representation at the location.

In addition to one or more of the features described herein, or as an alternative, further embodiments of the system may include a cloud computing environment, wherein at least one of the steps performed by the one or more processors is performed in the cloud computing environment.

In addition to one or more of the features described herein, or as an alternative, further embodiments of the system may include at least one other computing device, wherein the one or more processors are further responsive to executable computer instructions for synchronizing the digital representation with the indication of the location of the 3D coordinate scanner with the at least one other computing device.

In addition to one or more of the features described herein, or as an alternative, further embodiments of the system may include the at least one other computing device being a second mobile computing device.

In addition to one or more of the features described herein, or as an alternative, further embodiments of the system may include the at least one other computing device being located in a cloud computing environment.

In addition to one or more of the features described herein, or as an alternative, further embodiments of the system may include the synchronizing being performed over a communications medium.

40 In addition to one or more of the features described herein, or as an alternative, further embodiments of the system may include the synchronizing being performed with a second mobile computing device when a quality parameter of the communications medium is below a threshold, and the synchronizing is with a third computing device located in a cloud computing environment.

In addition to one or more of the features described herein, or as an alternative, further embodiments of the system may include the synchronizing with the second mobile computing device is via a wired local area network, a wireless local area network, Bluetooth, or a combination of the foregoing.

According to one or more embodiments, a computer program product is provided. The computer program product comprises a memory device with computer executable instructions stored thereon, the computer executable instructions when executed by one or more processors cause the one or more processors to perform a method of tracking scanning data acquired by a three-dimensional (3D) coordinate scanner. The method includes storing a digital representation of an environment in memory of a mobile computing device. A first scan is performed with the 3D coordinate scanner in an area of the environment. A location of the first scan is determined on the digital representation. The first scan is registered with the digital representation. The location of the 3D coordinate scanner is indicated on the digital representation at the time of the first scan.

In addition to one or more of the features described herein, or as an alternative, further embodiments of the computer program product may include the digital representation of the environment being at least one of a 2D floorplan, a building information management model, a computer aided design model, a point cloud, or a 3D surface model.

In addition to one or more of the features described herein, or as an alternative, further embodiments of the computer program product may include generating a first point cloud based at least in part on the first scan.

In addition to one or more of the features described herein, or as an alternative, further embodiments of the computer program product may include generating a first subset point cloud based at least in part on the first point cloud, the first subset point cloud having less 3D coordinate data than the first point cloud.

In addition to one or more of the features described herein, or as an alternative, further embodiments of the computer program product may include the registering of the first scan with the digital representation includes positioning and orienting the first subset point cloud on the digital representation.

In addition to one or more of the features described herein, or as an alternative, further embodiments of the computer program product may include the first subset point cloud includes points of 3D coordinates of walls in the area, and the positioning and orienting of the first subset point cloud includes matching the points of 3D coordinates of walls with at least two walls on the digital representation.

In addition to one or more of the features described herein, or as an alternative, further embodiments of the computer program product may include acquiring a 2D image of the area at an actual location of the first scan, wherein the determining a location includes matching at least three feature points in the 2D image with feature points on the digital representation.

In addition to one or more of the features described herein, or as an alternative, further embodiments of the computer program product may include the 2D image being acquired with a camera on the 3D coordinate scanner.

In addition to one or more of the features described herein, or as an alternative, further embodiments of the computer program product may include the 2D image being acquired with a camera on the mobile computing device.

In addition to one or more of the features described herein, or as an alternative, further embodiments of the computer program product may include the determining a location includes at least one of 5G localization, image-based localization, reduced-data registration, Global Positioning Satellites (GPS), GLONASS Global Navigation Satellite System, Galileo Global Navigation Satellite System, Beidou Global Navigation Satellite System, LORAN navigation systems, wireless local area network based positioning systems, Ultrawide band positioning systems, and Bluetooth based positioning systems, within the area.

52 In addition to one or more of the features described herein, or as an alternative, further embodiments of the computer program product may include the localization includes reduced-data registration that is performed via a cloud to cloud registration method.

In addition to one or more of the features described herein, or as an alternative, further embodiments of the computer program product may include the determining a location includes displaying the digital representation on the mobile computing device, and the operator touching the screen at the position on the digital representation where the first scan was performed.

In addition to one or more of the features described herein, or as an alternative, further embodiments of the computer program product may include the indicating the location of the 3D coordinate scanner on the digital representation includes coloring the region on the digital representation that the first scan measured 3D coordinates.

In addition to one or more of the features described herein, or as an alternative, further embodiments of the computer program product may include the indicating the location of the 3D coordinate scanner on the digital representation includes placing a scanner identification data and a scan number data on the digital representation at the location.

In addition to one or more of the features described herein, or as an alternative, further embodiments of the computer program product may include at least one of the steps being performed in a cloud computing environment.

In addition to one or more of the features described herein, or as an alternative, further embodiments of the computer program product may include synchronizing the digital representation with the indication of the location of the 3D coordinate scanner with at least one other computing device.

In addition to one or more of the features described herein, or as an alternative, further embodiments of the computer program product may include the at least one other computing device is a second mobile computing device.

In addition to one or more of the features described herein, or as an alternative, further embodiments of the computer program product may include the at least one other computing device is located in a cloud computing environment.

In addition to one or more of the features described herein, or as an alternative, further embodiments of the computer program product may include the synchronizing being performed over a communications medium.

In addition to one or more of the features described herein, or as an alternative, further embodiments of the computer program product may include the synchronizing being performed with a second mobile computing device when a quality parameter of the communications medium is below a threshold, and the synchronizing is with a third computing device located in a cloud computing environment.

In addition to one or more of the features described herein, or as an alternative, further embodiments of the computer program product may include the synchronizing being performed with the second mobile computing device is via a wired local area network, a wireless local area network, Bluetooth, or a combination of the foregoing.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of a laser scanner in accordance with an embodiment;
FIG. 2 is a side view of the laser scanner illustrating a method of measurement according to an embodiment;
FIG. 3 is a schematic illustration of the optical, mechanical, and electrical components of the laser scanner according to an embodiment;
FIG. 4 illustrates a schematic illustration of the laser scanner of FIG. 1 according to an embodiment;
FIG. 5A is an illustration of a prior art field book;
FIG. 5B is an illustration of a field book for a multistory building;
FIG. 6 is a flow diagram of a method scanning a building using a digital field book;
FIG. 7 is an illustration of a digital field book in accordance with an embodiment;
FIG. 8 is a block diagram of a processing system for implementing the presently described techniques according to one or more embodiments described herein; and
FIG. 9 illustrates a cloud computing environment according to one or more embodiments described herein.

The detailed description explains embodiments of the invention, together with advantages and features, by way of example with reference to the drawings.

### DETAILED DESCRIPTION

Embodiments herein relate to a method of tracking and organizing multiple scans performed by one or more 3D coordinate measuring devices. The method allows for the improvement in registration and the time to register multiple scans during post processing.

3D reconstruction of a scene, typically, requires multiple captures from different positions relative to the scene to capture data (3D coordinates, images, etc.) of different portions of the target scene. In prior art methods, the locations where the 3D scans were performed was noted manually, on a paper layout or floorplan of the area being captured. It should be appreciated that the accuracy of the position of the scanner that performed the scan when so manually marked is less than desired. In some embodiments, the location of the scan is preferred to be known within 1 meter. In other embodiments, the location of the scan is preferred to be known within 0.5 meter. The low positional accuracy of the scanner on the paper layout or map increases substantially the amount of time and the level of operator skill in the post processing of the 3D coordinate data to register the plurality of scan data sets (e.g. point clouds having 3D coordinate data).

Such technical challenges affecting the quality of the data, and particularly the amount of time it takes before a 3D scan of an area is available for use, such as by architects or engineers to verify the as-built dimensions of a structure for example.

As a result, technical solutions described herein facilitate the determination and tracking of the position of one or more 3D coordinate scanners during the scanning of an area that involves multiple scans, such as a construction site for example.

Embodiments of the technical solutions described herein further facilitate the organization of multiple scanning teams that are operating 3D coordinate scanners simultaneously by indicating which areas on the layout or floorplan have been scanned. This provides a technical solution for avoiding missing a portion of the area being scanned.

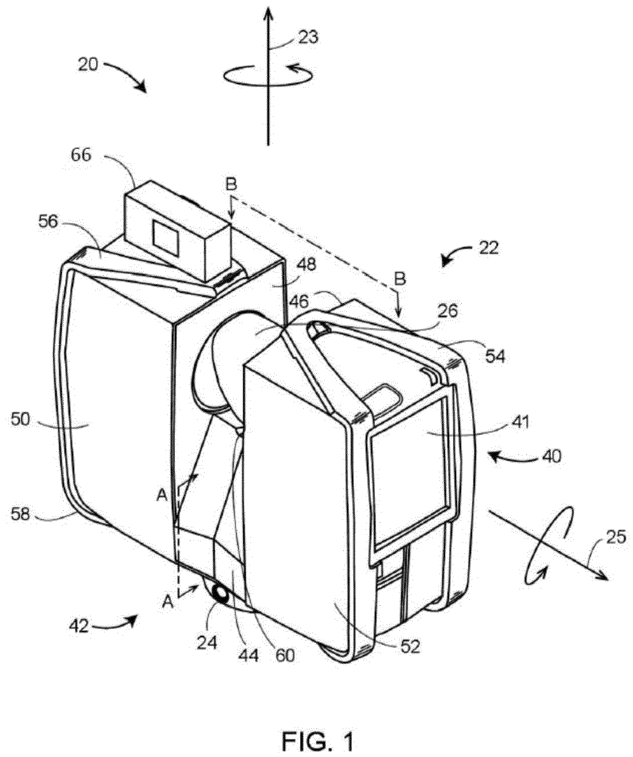

Referring now to FIGS. 1 - 3, a laser scanner 20 is shown for optically scanning and measuring the environment surrounding the laser scanner 20. It should be appreciated that while embodiments herein may refer to a particular type of 3D coordinate measuring device, such as a TOF laser scanning device for example, this is for example purposes and the claims should not be so limited. In other embodiments, other types of coordinate measurement devices may be used.

The laser scanner 20 has a measuring head 22 and a base 24. The measuring head 22 is mounted on the base 24 such that the laser scanner 20 may be rotated about a vertical axis 23. In one embodiment, the measuring head 22 includes a gimbal point 27 that is a center of rotation about the vertical axis 23 and a horizontal axis 25. The measuring head 22 has a rotary mirror 26, which may be rotated about the horizontal axis 25. The rotation about the vertical axis may be about the center of the base 24. The terms vertical axis and horizontal axis refer to the scanner in its normal upright position. It is possible to operate a 3D coordinate measurement device on its side or upside down, and so to avoid confusion, the terms azimuth axis and zenith axis may be substituted for the terms vertical axis and horizontal axis, respectively. The term pan axis or standing axis may also be used as an alternative to vertical axis.

The measuring head 22 is further provided with an electromagnetic radiation emitter, such as light emitter 28, for example, that emits an emitted light beam 30. In one embodiment, the emitted light beam 30 is a coherent light beam such as a laser beam. The laser beam may have a wavelength range of approximately 300 to 1600 nanometers, for example 790 nanometers, 905 nanometers, 1550 nm, or less than 400 nanometers. It should be appreciated that other electromagnetic radiation beams having greater or smaller wavelengths may also be used. The emitted light beam 30 is amplitude or intensity modulated, for example, with a sinusoidal waveform or with a rectangular waveform. The emitted light beam 30 is emitted by the light emitter 28 onto a beam steering unit, such as mirror 26, where it is deflected to the environment. A reflected light beam 32 is reflected from the environment by an object 34. The reflected or scattered light is intercepted by the rotary mirror 26 and directed into a light receiver 36. The directions of the emitted light beam 30 and the reflected light beam 32 result from the angular positions of the rotary mirror 26 and the measuring head 22 about the axes 25 and 23, respectively. These angular positions in turn depend on the corresponding rotary drives or motors.

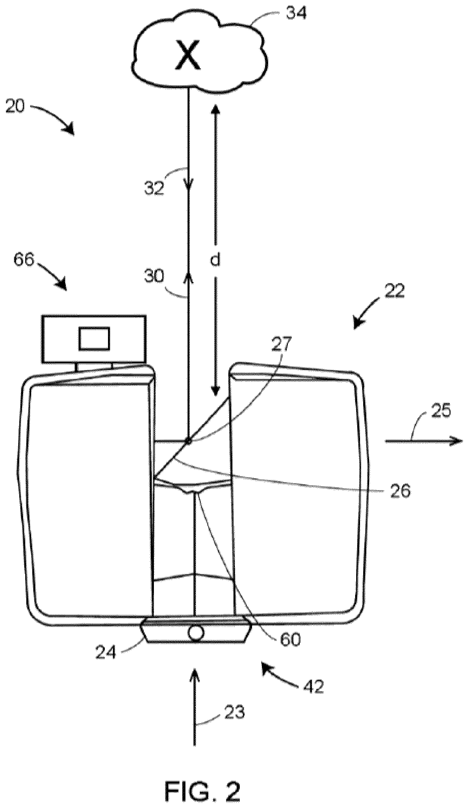

Coupled to the light emitter 28 and the light receiver 36 is a controller 38. The controller 38 determines, for a multitude of measuring points X (FIG. 2), a corresponding number of distances d between the laser scanner 20 and the points X on object 34. The distance to a particular point X is determined based at least in part on the speed of light in air through which electromagnetic radiation propagates from the device to the object point X. In one embodiment, the phase shift of modulation in light emitted by the laser scanner 20 and the point X is determined and evaluated to obtain a measured distance d.

The speed of light in air depends on the properties of the air, such as the air temperature, barometric pressure, relative humidity, and concentration of carbon dioxide. Such air properties influence the index of refraction n of the air. The speed of light in air is equal to the speed of light in vacuum c divided by the index of refraction. In other words, cₐᵢᵣ = c / *n.* A laser scanner of the type discussed herein is based on the time-of-flight (TOF) of the light in the air (the round-trip time for the light to travel from the device to the object and back to the device). Examples of TOF scanners include scanners that measure round trip time using the time interval between emitted and returning pulses (pulsed TOF scanners), scanners that modulate light sinusoidally, and measure phase shift of the returning light (phase-based scanners), as well as many other types. A method of measuring distance based on the time-of-flight of light depends on the speed of light in air and is therefore easily distinguished from methods of measuring distance based on triangulation. Triangulation-based methods involve projecting light from a light source along a particular direction and then intercepting the light on a camera pixel in a particular direction. By knowing the distance between the camera and the projector and by matching a projected angle with a received angle, the method of triangulation enables the distance to the object to be determined based on one known length and two known angles of a triangle. The method of triangulation, therefore, does not directly depend on the speed of light in air.

In one mode of operation, the scanning of the volume around the laser scanner 20 takes place by rotating the rotary mirror 26 relatively quickly about axis 25 while rotating the measuring head 22 relatively slowly about axis 23, thereby moving the assembly in a spiral pattern. In an exemplary embodiment, the rotary mirror rotates at a maximum speed of 5820 revolutions per minute. For such a scan, the gimbal point 27 defines the origin of the local stationary reference system. The base 24 rests in this local stationary reference system.

In addition to measuring a distance d from the gimbal point 27 to an object point X, the scanner 20 may also collect gray-scale information related to the received intensity (equivalent to the term "brightness" or "optical power") value. The gray-scale value may be determined at least in part, for example, by the integration of the bandpass-filtered and amplified signal in the light receiver 36 over a measuring period attributed to the object point X. As will be discussed in more detail herein, the intensity value may be used to enhance color images that are used to colorize the scanned data.

The measuring head 22 may include a display device 40 integrated into the laser scanner 20. The display device 40 may include a graphical touch screen 41, as shown in FIG. 1, which allows the operator to set the parameters or initiate the operation of the laser scanner 20. For example, touch screen 41 may have a user interface that allows the operator to provide measurement instructions to the device, and the screen may also display measurement results.

The laser scanner 20 includes a carrying structure 42 that provides a frame for the measuring head 22 and a platform for attaching the components of the laser scanner 20. In one embodiment, the carrying structure 42 is made from a metal such as aluminum. The carrying structure 42 includes a traverse 44 having a pair of walls 46, 48 on opposing ends. The walls 46, 48 are parallel to each other and extend in a direction opposite the base 24. Shells 50, 52 are coupled to walls 46, 48 and cover the components of the laser scanner 20. In the exemplary embodiment, shells 50, 52 are made from a plastic material, such as polycarbonate or polyethylene, for example. The shells 50, 52 cooperate with the walls 46, 48 to form a housing for the laser scanner 20.

On an end of the shells 50, 52 opposite the walls 46, 48, a pair of yokes 54, 56 are arranged to partially cover the respective shells 50, 52. In the exemplary embodiment, the yokes 54, 56 are made from a suitably durable material, such as aluminum, for example, that assists in protecting the shells 50, 52 during transport and operation. The yokes 54, 56 each includes a first arm portion 58 that is coupled, such as with a fastener, for example, to the traverse 44 adjacent the base 24. The arm portion 58 for each yoke 54, 56 extends from the traverse 44 obliquely to an outer corner of the respective shell 50, 52. From the outer corner of the shell, the yokes 54, 56 extend along the side edge of the shell to an opposite outer corner of the shell. Each yoke 54, 56 further includes a second arm portion that extends obliquely to the walls 46, 48. It should be appreciated that the yokes 54, 56 may be coupled to the traverse 44, the walls 46, 48, and the shells 50, 54 at multiple locations.

The pair of yokes 54, 56 cooperate to circumscribe a convex space within which the two shells 50, 52 are arranged. In the exemplary embodiment, the yokes 54, 56 cooperate to cover all of the outer edges of the shells 50, 54, while the top and bottom arm portions project over at least a portion of the top and bottom edges of the shells 50, 52. This provides advantages in protecting the shells 50, 52, and the measuring head 22 from damage during transportation and operation. In other embodiments, the yokes 54, 56 may include additional features, such as handles to facilitate the carrying of the laser scanner 20 or attachment points for accessories, for example.

On top of the traverse 44, a prism 60 is provided. The prism extends parallel to walls 46, 48. In the exemplary embodiment, the prism 60 is integrally formed as part of the carrying structure 42. In other embodiments, prism 60 is a separate component that is coupled to the traverse 44. When mirror 26 rotates, during each rotation, mirror 26 directs the emitted light beam 30 onto the traverse 44 and the prism 60. Due to non-linearities in the electronic components, for example, in the light receiver 36, the measured distances d may depend on signal strength, which may be measured in optical power entering the scanner or optical power entering optical detectors within the light receiver 36, for example. In an embodiment, a distance correction is stored in the scanner as a function (possibly a nonlinear function) of distance to a measured point, and optical power (generally unscaled quantity of light power sometimes referred to as "brightness") returned from the measured point and sent to an optical detector in the light receiver 36. Since the prism 60 is at a known distance from the gimbal point 27, the measured optical power level of light reflected by the prism 60 may be used to correct distance measurements for other measured points, thereby allowing for compensation to correct for the effects of environmental variables such as temperature. In the exemplary embodiment, the resulting correction of distance is performed by controller 38.

In an embodiment, the base 24 is coupled to a swivel assembly (not shown) such as that described in commonly owned U.S. Patent No. 8,705,012 ('012), which is incorporated by reference herein. The swivel assembly is housed within the carrying structure 42 and includes a motor 138 that is configured to rotate the measuring head 22 about the axis 23. In an embodiment, the angular/rotational position of the measuring head 22 about the axis 23 is measured by angular encoder 134.

An auxiliary image acquisition device 66 may be a device that captures and measures a parameter associated with the scanned area or the scanned object and provides a signal representing the measured quantities over an image acquisition area. The auxiliary image acquisition device 66 may be, but is not limited to, a pyrometer, a thermal imager, an ionizing radiation detector, or a millimeter-wave detector. In an embodiment, the auxiliary image acquisition device 66 is a color camera.

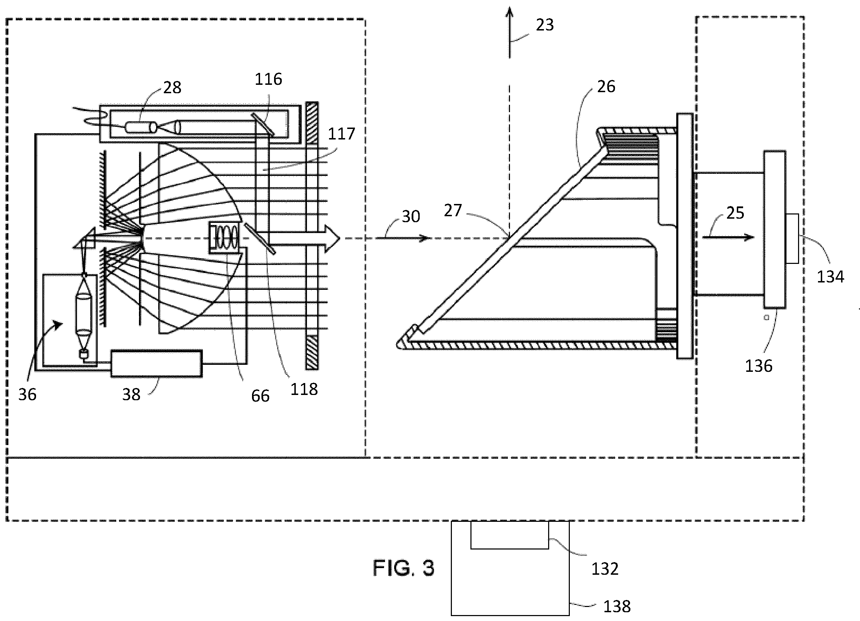

In an embodiment, camera 66 is located internally to the scanner (see FIG. 3) and may have the same optical axis as the 3D scanner device. In this embodiment, camera 66 is integrated into the measuring head 22 and arranged to acquire images along the same optical pathway as emitted light beam 30 and reflected light beam 32. In this embodiment, the light from the light emitter 28 reflects off a fixed mirror 116 and travels to dichroic beam-splitter 118 that reflects the light 117 from the light emitter 28 onto the rotary mirror 26. In an embodiment, mirror 26 is rotated by a motor 136, and the angular/rotational position of the mirror is measured by an angular encoder 134. The dichroic beam-splitter 118 allows light to pass through at wavelengths different than the wavelength of light 117. For example, the light emitter 28 may be a near-infrared laser light (for example, that emits light at wavelengths of 780 nm or 1150 nm), with the dichroic beam-splitter 118 configured to reflect the infrared laser light while allowing visible light (e.g., wavelengths of 400 to 700 nm) to transmit through. In other embodiments, the determination of whether the light passes through the dichroic beam-splitter 118 or is reflected depends on the polarization of the light. Camera 66 obtains 2D images of the scanned area to capture color data to add to the captured point cloud. In the case of a built-in color camera having an optical axis coincident with that of the 3D scanning device, the direction of the camera view may be easily obtained by simply adjusting the steering mechanisms of the scanner - for example, by adjusting the azimuth angle about the axis 23 and by steering the mirror 26 about the axis 25.

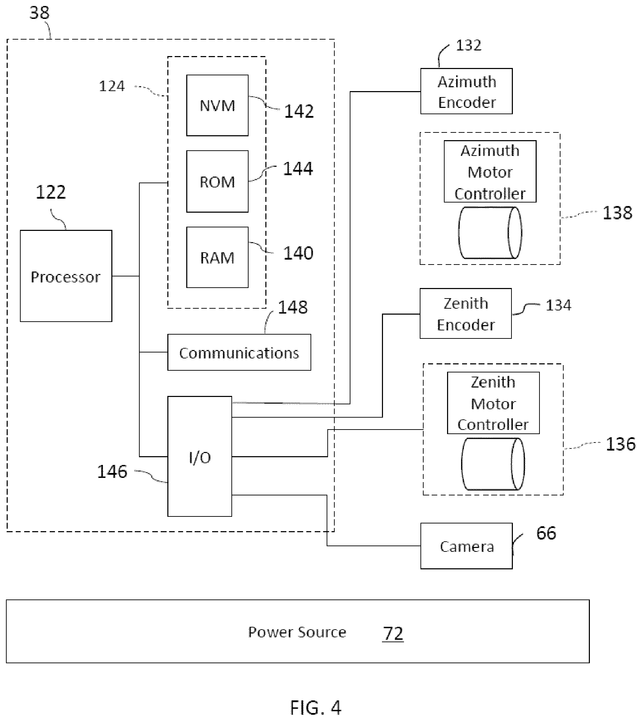

Referring to FIG. 4 with continuing reference to FIGS. 1-3, elements are shown of the laser scanner 20. Controller 38 is a suitable electronic device capable of accepting data and instructions, executing the instructions to process the data, and presenting the results. The controller 38 includes one or more processing elements 122. The processors may be microprocessors, field programmable gate arrays (FPGAs), digital signal processors (DSPs), and generally any device capable of performing computing functions. The one or more processors 122 have access to memory 124 for storing information.

Controller 38 is capable of converting the analog voltage or current level provided by light receiver 36 into a digital signal to determine a distance from the laser scanner 20 to an object in the environment. Controller 38 uses the digital signals that act as input to various processes for controlling the laser scanner 20. The digital signals represent one or more laser scanner 20 data including but not limited to the distance to an object, images of the environment, images acquired by the camera 66, angular/rotational measurements by a first or azimuth encoder 132, and angular/rotational measurements by a second axis or zenith encoder 134.

In general, controller 38 accepts data from encoders 132, 134, the light receiver 36, light source 28, and the camera 66 and is given certain instructions for the purpose of generating a 3D point cloud of a scanned environment. Controller 38 provides operating signals to the light source 28, the light receiver 36, the camera 66, the zenith motor 136, and the azimuth motor 138. The controller 38 compares the operational parameters to predetermined variances and, if the predetermined variance is exceeded, generates a signal that alerts an operator to a condition. The data received by controller 38 may be displayed on a user interface 40 coupled to controller 38. The user interface 40 may be one or more LEDs (light-emitting diodes) 82, an LCD (liquid-crystal diode) display, a CRT (cathode ray tube) display, a touchscreen display, or the like. A keypad may also be coupled to the user interface for providing data input to controller 38. In one embodiment, the user interface is arranged or executed on a mobile computing device that is coupled for communication, such as via a wired or wireless communications medium (e.g., Ethernet, serial, USB, Bluetooth^{™} or WiFi), for example, to the laser scanner 20.

The controller 38 may also be coupled to external computer networks such as a local area network (LAN) and the Internet. A LAN interconnects one or more remote computers, which are configured to communicate with controller 38 using a well-known computer communications protocol such as TCP/IP (Transmission Control Protocol/Internet Protocol), RS-232, ModBus, and the like. Additional systems 20 may also be connected to LAN with the controllers 38 in each of these systems 20 being configured to send and receive data to and from remote computers and other systems 20. The LAN may be connected to the Internet. This connection allows controller 38 to communicate with one or more remote computers connected to the Internet.

The processors 122 are coupled to memory 124. The memory 124 may include random access memory (RAM) device 140, a non-volatile memory (NVM) device 142, and a read-only memory (ROM) device 144. In addition, the processors 122 may be connected to one or more input/output (I/O) controllers 146 and a communications circuit 148. In an embodiment, the communications circuit 92 provides an interface that allows wireless or wired communication with one or more external devices or networks, such as the LAN discussed above.

Controller 38 includes operation control methods described herein, which can be embodied in application code. For example, these methods are embodied in computer instructions written to be executed by processors 122, typically in the form of software. The software can be encoded in any language, including, but not limited to, assembly language, VHDL (Verilog Hardware Description Language), VHSIC HDL (Very High Speed IC Hardware Description Language), Fortran (formula translation), C, C++, C#, Objective-C, Visual C++, Java, ALGOL (algorithmic language), BASIC (beginners all-purpose symbolic instruction code), visual BASIC, ActiveX, HTML (Hypertext Markup Language), Python, Ruby, and any combination or derivative of at least one of the foregoing.

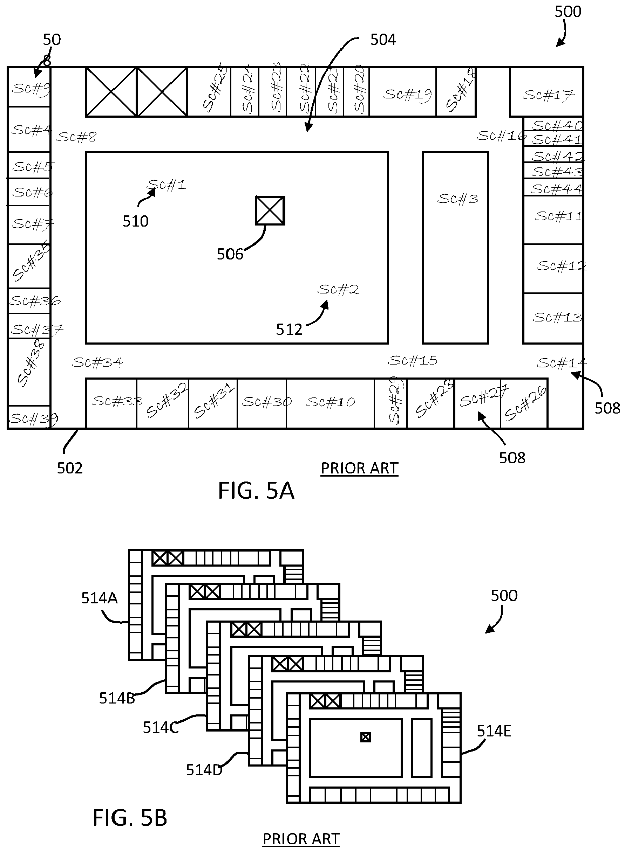

Referring now to FIG. 5A and FIG. 5B an illustration of an example prior art field book such as a paper based field book 500 is shown. The paper based field book 500 consists of a paper member 502 having a building floor plan 504 printed thereon. The floor plan 504 includes a graphical representation of the walls, rooms and other features (such as column 506 for example). The paper based field book 500 is manually marked up by the scanning operator(s) as scans are performed. The indicia 508 marked on the floor plan 504 by the operator may include information that includes, but is not limited to, the scanner identification (ID), operator ID, a scan number, and an approximate position of the scanner when the scan was performed. In some embodiments, at least some of this data is also stored on the scanner with the 3D coordinate data (i.e. a point cloud) so that the data files may be associated with the paper based field book 500 when the operator registers the 3D coordinate data from multiple scans into a common frame of reference.

It should be appreciated that to generate a point cloud of an entire, or even a portion of, a structure such as a commercial office building for example, a plurality of scanning operations may be performed. Since obstructions, such as column 506 or walls for example, prevent measurements of an entire space from being acquired from a single position. For example, the room in which column 506 is located may involve at least two scans, such as those indicated by indicia 510, 512. This allows measurements to be made on each side of the column 506.

The paper based field book 500 may include a plurality of sheets 514A-514E. A plurality of sheets 514A-514E for a variety of reasons, such as the location being a multistory building for example. It should be appreciated that in some instances, a single floor may use multiple sheets 514A-514E. It should also be appreciated that while embodiments herein may refer to the scanning of a building or a floor, this is for example purposes and the claims should not be so limited. In other embodiments, the area being scanned may be another type of environment, such as construction site (prior to building) or an archeological site for example.

It should be further appreciated that the use of a paper based field book 500 is time consuming, tedious, and increases the risk that information used in the registration process may be missing. Further, the manual marking of the location of where the scanner is positioned has, at best, limited accuracy. This further makes the registration process more difficult and time consuming. For example, the transferring of data from the paper field book and registration of the data sets may take up to two weeks after the scanning is completed.

Embodiments provided herein provide for a method and system of tracking the scanning of an area/building while reducing the time to register the data sets after scanning is completed. It is contemplated that embodiments of the method and system described herein will provide a technical solution that reduces the post-processing registration process from two weeks to half a day.

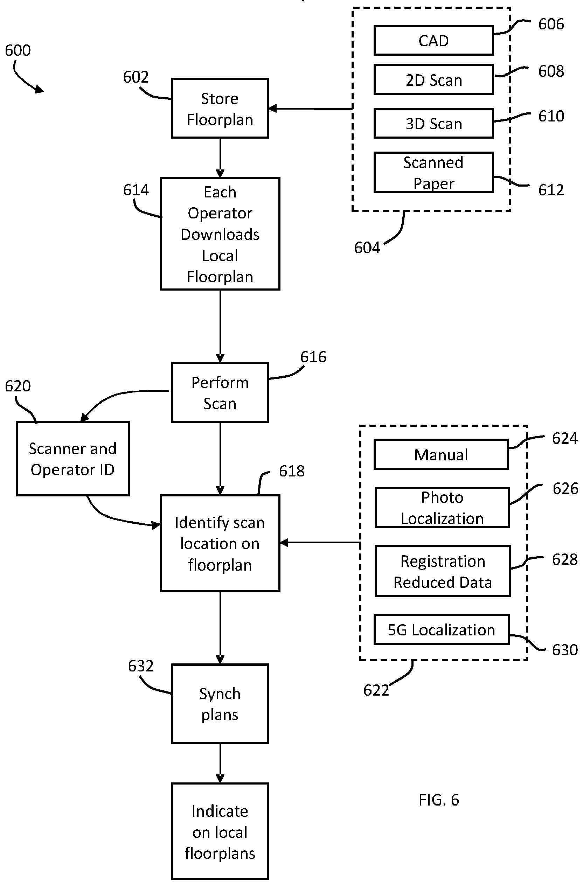

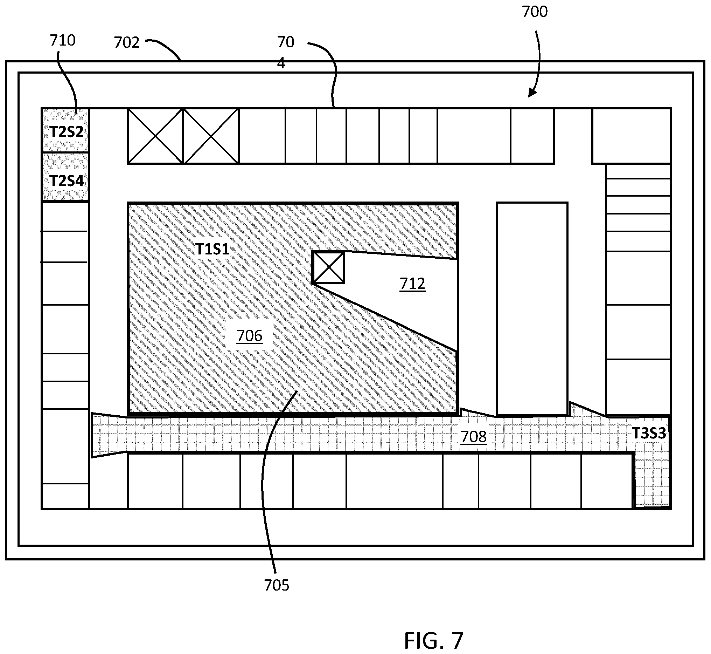

Referring now to FIG. 6 and FIG. 7, a method 600 is shown for generating a digital field book such as digital field book 700 on a mobile computing device 702 or other computing device. The method 600 starts in block 602 where a digital representation of the environment, such as a floorplan 704 of the building for example, to be scanned is stored in memory. It should be appreciated that in use of a term "floorplan" is intended to be nonlimiting and the diagram of the area to be scanned may be nonstructural, such as a construction site or other area in the environment for example. Further, while embodiments herein describe the digital representation as a 2D floor plan, this is for example purposes and the claims should not be so limited. In other embodiments, the digital representation may be a building information management (BIM) model, a computer aided design model, a point cloud, a golden point cloud, or a 3D surface model, or a combination of the foregoing for example. In an embodiment, the floorplan is stored in a cloud based computing system. In an embodiment, the scanner operator may have a client device, such as a mobile computing device, a cellular phone, a table computer, a laptop computer, or a desktop computer for example, that allows them to access the floorplan. In another embodiment, the floorplan may be stored in a central computing device (e.g. a laptop or desktop computing device). In still another embodiment, a plurality of computing devices may be used, at least some of the plurality of computing devices being associated with one or more scanning devices. Where multiple computing devices are used, the computing devices have communications capability for communicating data, such as with the scanning devices, the other computing devices, or a cloud-based computing system.

The floorplan 704 may be obtained from a variety of sources 604. These sources may include, but not limited to, computer aided design data 606, a floorplan data generated by a two-dimensional (2D) scanner 608, a floorplan data generated by a 3D scanner 610, or a scanned in paper document 612 for example. The 2D scan data may be generated by a scanning device such a FARO SCANPLAN^{™} scanner produced by FARO Technologies, Inc of Lake Mary, Florida USA, or the scanner described in commonly owned United States Patent 10,824,773B2, the contents of which are incorporated by reference herein.

In an embodiment where multiple scanners are operated at the same time, the method 600 then proceeds to block 614 (sometimes referring to "Scanning Teams"), where the operator downloads or transfers a local copy of the floorplan 704 to a local computing device (e.g. a laptop or tablet computer). The local computing device may be a mobile computing device. The local computing device is configured to communicate and transfer data between one or more external devices, such as but not limited to one or more scanning devices 20, other local computing devices, a central computing device, a cloud-based computing network, or a combination of the foregoing. The communication and transfer of data may be by any suitable communications medium or protocol, such as but not limited to WiFi (i.e. IEEE 802.11), Bluetooth (i.e.. IEEE 802.15), or cellular communications mediums for example.

The method 600 then proceeds to block 616 where the scanner 20 is used to perform a scan. In an embodiment, the performing of the scan generates a data set consisting of a plurality of 3D coordinates of points of points on surfaces in the spherical volume about the location of the scanner 20. This plurality of 3D coordinates are in a local coordinate frame of reference (e.g. gimbal point 27, FIG. 2). The method 600 then proceeds to block 618 where the location of the scan is identified on the local floorplan. In an embodiment, once the scan is completed, data or information regarding the scan is transmitted (via block 620) to a computing device, such as but not limited to the local computing device, a central computing device, or a cloud-based computing network. The information transferred may include data regarding the scan, such as but not limited a scanner ID, an operator ID, the time of the scan, and registration data for example.

The location where the scan is performed on the floorplan 704 may be determined using a variety of methods 622. These nonlimiting methods 622 may include, but are not limited to, manually positioning 624, image-based localization 626, reduced-data registration 628, cellular (e.g. 5G) localization 630, Global Positioning Satellites (GPS), GLONASS Global Navigation Satellite System, Galileo Global Navigation Satellite System, Beidou Global Navigation Satellite System, LORAN navigation systems, wireless local area network (WiFi) based positioning systems, Ultrawide band positioning systems, and Bluetooth based positioning systems, or a combination of the foregoing. Manual positioning 624 may include the operator touching the location of the scanner on the floorplan using a user-interface of the computing device, such as a touchscreen display, a mouse, or a stylus for example. In some embodiments, it is desired that the location indicated by the operator is within one-meter of the actual location. In other embodiments, it is desired that the that the location indicated by the operator is within one-half meter of the actual location.

The image-based localization 626 involves performing a graphical analysis of a 2D photo using image or camera based localization. In an embodiment, a 2D image or photograph is taken at the location where the scanner is positioned. In an embodiment, the 2D image is analyzed to identify features, such as edges of walls, windows and doors for example. The position of these features are compared with the floorplan 704 and the location and pose of the scanner 20 is determined by fitting at least three features from 2D image with corresponding features on the floorplan 704. In an embodiment, the 2D image is acquired by a camera on the scanner 20 (e.g. camera 66 or camera 28). In an embodiment, the 2D image is an intensity image generated based on the irradiance of the received laser light.

The registration based on reduced-data registration 628 includes generating a subset data set of the 3D coordinate data, transferring this to the computing device 702 and matching features in the subset data set with features from the floorplan 704. It should be appreciated that the full data set of the 3D coordinate data may involve millions of data points. Due to the large size of the 3D coordinate data, the forming of the subset data allows for processing on computing device 702 having limited computer processing power or memory. So the registration based on reduced-data registration 628 provides a technical solution for allowing an accurate determination of the scanner position automatically with a mobile computing device. In an embodiment, the subset data is comprised of those points located on walls (e.g. vertical surfaces relative to gravity) with the floor and ceiling 3D coordinates removed. In still another embodiment, the subset data is comprised of points that lie in a plane parallel with the floor (e.g. the surface the scanner is resting). It should be appreciated that in either of these embodiments, the subset data may be overlaid on the floorplan 704 to position the 3D coordinate points over the walls in the floorplan 704. This may be performed automatically by the computing device 702, such as by using a best-fit method, manually by the operator, or a combination of foregoing.

Th cellular localization utilizes cellular signals to triangulate a location based on cellular towers. When used on a 5G network, the location may be identified with an accuracy of one-meter or less. In an embodiment, the localization communications circuit is integrated into the scanner 20. The location information may be transferred to the computing device 702 with the scanner ID in block 620. In another embodiment, the localization is performed on the computing device 702 by positioning the computing device 702 close to the scanner 20 and acquiring the position.

In an embodiment where multiple scanners are being operated, the method 600 then proceeds to block 632 where the data from the scan, including but not limited to the scanner ID, operator ID, 3D coordinate data, subset data, or a combination of the foregoing is synchronized between the plurality of computing devices. It should be appreciated that this allows each of the operators to visualize what areas of the building have been scanned. In an embodiment, the data may be synchronized with a remote computer (e.g. one or more nodes of a cloud computing environment) where a communications medium, such as a wireless local area network or a cellular network for example, connects the each of the computing devices 702 to the remote computer. In an embodiment, the computing devices 702 synchronize locally, such as between each of the computing devices 702 (e.g via Bluetooth or a wired/wireless local area network), when a quality parameter of the communications medium is below a threshold. In an embodiment, the quality parameter represents the stability of the connection between the computing device 702 and the remote computer. When the quality parameter improves above the threshold, the computing device 702 resume synchronizing with the remote computer.

Once the floorplan 704 on the computing device 702 has been updated, in an embodiment the method 600 proceeds to block 634 where an indicator is placed on the floorplan 704 showing that the scan was performed. In an embodiment, the indicator 706, 708, 710 may graphically display the boundaries of the scan. It should be appreciated that this shows the operator(s) what areas, or portions of the room, such as area 712 for example. This provides a technical solution in reducing the risk of the operators missing an area of the building or wasting time by scanning an area that has already been measured. In an embodiment, the indicators 706, 708, 710 may be color coded based on one or more of the scanner ID, the operator ID, or the scan number.

It should be appreciated that even in a single floor or building the number of scans that would be performed to obtain a 3D point cloud would be large. Thus, embodiments of the present disclosure provide a technical solution to automatically tracking the position of the scanner and areas scanned with a high level of accuracy relative to the prior art paper field book, and further provides a reduced risk of error. In further embodiments in areas such as room 705, it may be desired to have a predetermined amount of overlap between the scans, meaning scans performed in the room will measure a predetermined amount of the same surfaces. This may be done, for example, to aid in registration. In this embodiment, the digital field book 700 may indicate on the floorplan 704 the overlapping areas. In another embodiment, the method 600 may include the step of determining the amount of overlap between the scans and provide a visual indication (e.g. a percentage) of the amount of overlap. In still a further embodiment, the digital field book 700 may generate an alarm or alert (e.g. a visual indicator or an audible sound) to notify the operator when the overlap is below a desired threshold.

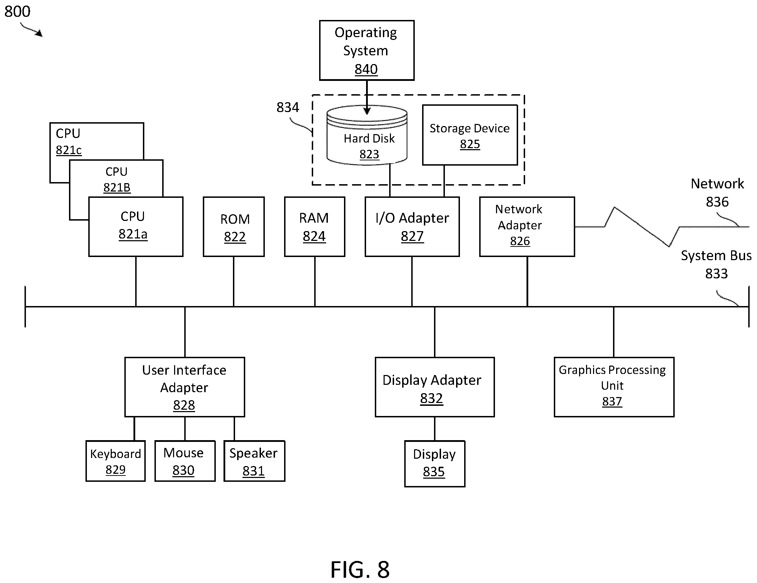

It is understood that one or more embodiments described herein is capable of being implemented in conjunction with any other type of computing environment now known or later developed. For example, FIG. 8 depicts a block diagram of a processing system 800 for implementing the techniques described herein. In accordance with one or more embodiments described herein, the processing system 800 is an example of a cloud computing node 10 of FIG. 8. In examples, processing system 800 has one or more central processing units ("processors" or "processing resources") 821a, 821b, 821c, etc. (collectively or generically referred to as processor(s) 821 and/or as processing device(s)). In aspects of the present disclosure, each processor 821 can include a reduced instruction set computer (RISC) microprocessor. Processors 821 are coupled to system memory (e.g., random access memory (RAM) 824) and various other components via a system bus 833. Read only memory (ROM) 822 is coupled to system bus 833 and may include a basic input/output system (BIOS), which controls certain basic functions of processing system 800.

Further depicted are an input/output (I/O) adapter 827 and a network adapter 826 coupled to system bus 833. I/O adapter 827 may be a small computer system interface (SCSI) adapter that communicates with a hard disk 823 and/or a storage device 825 or any other similar component. I/O adapter 827, hard disk 823, and storage device 825 are collectively referred to herein as mass storage 834. Operating system 840 for execution on processing system 800 may be stored in mass storage 834. The network adapter 826 interconnects system bus 833 with an outside network 836 enabling processing system 800 to communicate with other such systems.

A display (e.g., a display monitor) 835 is connected to system bus 833 by display adapter 832, which may include a graphics adapter to improve the performance of graphics intensive applications and a video controller. In one aspect of the present disclosure, adapters 826, 827, and/or 832 may be connected to one or more I/O busses that are connected to system bus 833 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 833 via user interface adapter 828 and display adapter 832. A keyboard 829, mouse 830, and speaker 831 may be interconnected to system bus 833 via user interface adapter 828, which may include, for example, a Super I/O chip integrating multiple device adapters into a single integrated circuit.

In some aspects of the present disclosure, processing system 800 includes a graphics processing unit 837. Graphics processing unit 837 is a specialized electronic circuit designed to manipulate and alter memory to accelerate the creation of images in a frame buffer intended for output to a display. In general, graphics processing unit 837 is very efficient at manipulating computer graphics and image processing, and has a highly parallel structure that makes it more effective than general-purpose CPUs for algorithms where processing of large blocks of data is done in parallel.

Thus, as configured herein, processing system 800 includes processing capability in the form of processors 821, storage capability including system memory (e.g., RAM 824), and mass storage 834, input means such as keyboard 829 and mouse 830, and output capability including speaker 831 and display 835. In some aspects of the present disclosure, a portion of system memory (e.g., RAM 824) and mass storage 834 collectively store the operating system 840 to coordinate the functions of the various components shown in processing system 800.

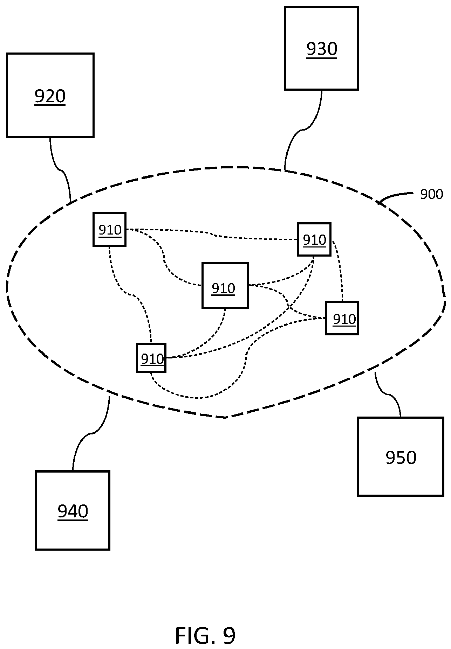

In one or more embodiments, the controller 38 or computing device 702 can be implemented, in whole or in part, on the processing system 800. Additionally, a cloud computing system 900 (FIG. 9) can be in wired or wireless electronic communication with one or all of the elements of the system 800. For example, network 836 may be a cloud computing system. Cloud computing can supplement, support or replace some or all of the functionality of the elements of the system 800. Additionally, some or all of the functionality of the elements of system 800 can be implemented as a node 910 of the cloud computing system 900. A cloud computing node 910 is only one example of a suitable cloud computing node and is not intended to suggest any limitation as to the scope of use or functionality of embodiments described herein.

Cloud computing is a model of service delivery for enabling convenient, on-demand network access to a shared pool of configurable computing resources (e.g., networks, network bandwidth, servers, processing, memory, storage, applications, virtual machines, and services) that can be rapidly provisioned and released with minimal management effort or interaction with a provider of the service. Cloud based computing may include characteristics such as on-demand self service (e.g. the scanning operator initiates one or more methods on the nodes 910); broad network access; resource pooling; elasticity (e.g. computing capabilities may be rapidly added or subtracted from the operation); and measured service (e.g. the control and optimization of resources is monitored and controlled). Cloud computing provides for several models such as Software as a Service (SaaS); Platform as a Service (PaaS); and Infrastructure as a Service (IaaS).

The cloud computing system 900 may be implemented in a number of ways. The system 900 may be what is known as a community cloud where the computing resources are shared by several organizations. The system 900 may also be a private cloud where the computing resources are controlled by a single organization or corporation. The system may also be a public cloud where the computing resources are made available to the general public. An example of a public cloud may be Amazon Web Services (AWS) provided by Amazon.com Inc of Seattle, Washington, USA. Finally there may be a hybrid of the foregoing services, where some of the resources are shared, and some are privately controlled.

In an embodiment, the cloud computing system 900 includes one or more cloud computing nodes 910 with which local computing devices used by cloud consumers, such as scanner 920 (e.g. controller 38), a mobile computing device 930 (e.g. computing device 702, a table computer, or cellular phone), desktop computer 940, and/or laptop computer 950 may communicate for example. Nodes 910 may communicate with one another. They may be grouped (not shown) physically or virtually, in one or more networks, such as Private, Community, Public, Hybrid clouds, or a combination thereof for example. This allows cloud computing system 900 to offer infrastructure, platforms and/or software as services for which a cloud consumer does not need to maintain resources on a computing device 702. It should be appreciated that the devices 920, 930, 940, 950 are described for example purposes and the claims should not be so limited. In other embodiments, other types or numbers of devices may be connected to the system 900. For example, when multiple scanning operators are operating within an area, each of the scanners 20 or their associated computing device 702 (if used) may be connected to the cloud computing system 900 In an embodiment, each of the scanners 20 are connected to the cloud computing system 900 and the operator interfaces with the cloud computing resources via the display device 40 and touch screen 41. It should be appreciated that the floorplan 704 may be displayed on the display device 40.

Technical solutions described herein can also be used improving the measurement of three-dimensional coordinates in areas of interest, such as a building that involve multiple scans to obtain a desired model of the environment.. The technical solutions include the automatic tracking of scanner locations to facilitate registration of the plurality of measurements into a common coordinate frame of reference. Still further technical solutions are provided for automatically providing visual feedback to the operators of areas scanned, which reduces the risk that a desired section of the area of interest may not be scanned.

Terms such as processor, controller, computer, DSP, FPGA are understood in this document to mean a computing device that may be located within an instrument, distributed in multiple elements throughout an instrument, or placed external to an instrument. Various embodiments of the invention are described herein with reference to the related drawings. Alternative embodiments of the invention can be devised without departing from the scope of this invention. Various connections and positional relationships (e.g., over, below, adjacent, etc.) are set forth between elements in the following description and in the drawings. These connections and/or positional relationships, unless specified otherwise, can be direct or indirect, and the present invention is not intended to be limiting in this respect. Accordingly, a coupling of entities can refer to either a direct or an indirect coupling, and a positional relationship between entities can be a direct or indirect positional relationship. Moreover, the various tasks and process steps described herein can be incorporated into a more comprehensive procedure or process having additional steps or functionality not described in detail herein.

For the sake of brevity, conventional techniques related to making and using aspects of the invention may or may not be described in detail herein. In particular, various aspects of computing systems and specific computer programs to implement the various technical features described herein are well known. Accordingly, in the interest of brevity, many conventional implementation details are only mentioned briefly herein or are omitted entirely without providing the well-known system and/or process details.

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instruction by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While the invention has been described in detail in connection with only a limited number of embodiments, it should be readily understood that the invention is not limited to such disclosed embodiments. Rather, the invention can be modified to incorporate any number of variations, alterations, substitutions, or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description but is only limited by the scope of the appended claims.

## Claims

**1.** A method of tracking scanning data acquired by a three-dimensional (3D) coordinate scanner, the method comprising:
storing a digital representation of an environment in memory of a mobile computing device;
performing a first scan with the 3D coordinate scanner in an area of the environment;
determining a location of the first scan on the digital representation;
registering the first scan with the digital representation; and
indicating the location of the 3D coordinate scanner on the digital representation at a time of the first scan.

**2.** The method of claim 1, wherein the digital representation of the environment includes at least one of a 2D floorplan, a building information management model, a computer aided design model, a point cloud, or a 3D surface model.

**3.** The method of claim 1, further comprising:
generating a first point cloud based at least in part on the first scan;
generating a first subset point cloud based at least in part on the first point cloud, the first subset point cloud having less 3D coordinate data than the first point cloud;
wherein the registering of the first scan with the digital representation includes positioning and orienting the first subset point cloud on the digital representation; and
wherein the first subset point cloud includes points of 3D coordinates of walls in the area, and the positioning and orienting of the first subset point cloud includes matching the points of 3D coordinates of walls with at least two walls on the digital representation

**5.** The method of claim 1, further comprising
acquiring a 2D image of the area at an actual location of the first scan, wherein the determining of the location includes matching at least three feature points in the 2D image with feature points on the digital representation; and
wherein the 2D image is acquired with a camera on the 3D coordinate scanner or the mobile computing device.

**6.** The method of claim 1, wherein the determining of the location includes at least one of 5G localization, image-based localization, reduced-data registration, Global Positioning Satellites (GPS), GLONASS Global Navigation Satellite System, Galileo Global Navigation Satellite System, Beidou Global Navigation Satellite System, LORAN navigation systems, wireless local area network based positioning systems, Ultrawide band positioning systems, and Bluetooth based positioning systems, within the area.

**7.** The method of claim 6, wherein the localization includes the reduced-data registration that is performed via a cloud to cloud registration method.

**8.** The method of claim 1, wherein the determining of the location includes displaying the digital representation on the mobile computing device, and an operator touching a screen at a position on the digital representation where the first scan was performed.

**9.** The method of claim 1, wherein the indicating the location of the 3D coordinate scanner on the digital representation includes coloring a region on the digital representation that the first scan measured 3D coordinates.

**10.** The method of claim 1, wherein the indicating the location of the 3D coordinate scanner on the digital representation includes placing a scanner identification data and a scan number data on the digital representation at the location.

**11.** The method of claim 1, further comprising:
synchronizing the digital representation with an indication of the location of the 3D coordinate scanner with at least one other computing device;
wherein the at least one other computing device is a second mobile computing device is operably in a cloud computing environment; and
wherein the synchronizing is with the second mobile computing device when a quality parameter of a communications medium is below a threshold, and the synchronizing is with a third computing device located in the cloud computing environment.

**12.** The method of claim 11, wherein the synchronizing with the second mobile computing device is via a wired local area network, a wireless local area network, Bluetooth, or a combination of the foregoing.

**13.** A system of tracking scanning data comprising:
a mobile computing device having memory with a digital representation of an environment stored thereon;
a 3D coordinate scanner configured to determine 3D coordinates of points in an area of the environment;
one or more processors operably coupled to the mobile computing device and the 3D coordinate scanner, the one or more processors being responsive to executable computer instructions for:
causing the 3D coordinate scanner to perform a first scan;
determining a location of the first scan on the digital representation;
registering the first scan with the digital representation; and
indicating the location of the 3D coordinate scanner on the digital representation at a time of the first scan.

**14.** The system of claim 13, wherein:
the digital representation of the environment includes at least one of a 2D floorplan, a building information management model, a computer aided design model, a point cloud, or a 3D surface model;
wherein the one or more processors are further responsive to executable computer instructions to generate a first point cloud based at least in part on the first scan;
wherein the registering of the first scan with the digital representation includes positioning and orienting a first subset point cloud on the digital representation; and
wherein the first subset point cloud includes the points of 3D coordinates of walls in the area, and the positioning and orienting of the first subset point cloud includes matching the points of 3D coordinates of walls with at least two walls on the digital representation.

**15.** A computer program product comprising a memory device with computer executable instructions stored thereon, the computer executable instructions when executed by one or more processors cause the one or more processors to perform a method of tracking scanning data acquired by a three-dimensional (3D) coordinate scanner, the method comprising:
storing a digital representation of an environment in memory of a mobile computing device;
performing a first scan with the 3D coordinate scanner in an area of the environment;
determining a location of the first scan on the digital representation;
registering the first scan with the digital representation; and
indicating the location of the 3D coordinate scanner on the digital representation at a time of a first scan.
